# EUROPÄISCHE PATENTSCHRIFT

(11) **EP 3 225 739 B1**
(45) Veröffentlichungstag und Bekanntmachung des Hinweises auf die Patenterteilung: **13.02.2019**
(21) Anmeldenummer: 16002682.9
(22) Anmeldetag: 19.12.2016
(51) Int. Cl.: E01F 8/02, E04B 1/82

(54) **WANDELEMENT**
WALL ELEMENT
ÉLÉMENT DE MUR

(30) Priorität: 30.03.2016 DE 102016003655
(43) Veröffentlichungstag der Anmeldung: 04.10.2017
(73) Patentinhaber: Wegenast, Klaus, 79102 Freiburg (DE)
(72) Erfinder: Wegenast, Klaus, 79102 Freiburg (DE)
(74) Vertreter: Börjes-Pestalozza, Henrich

(56) Entgegenhaltungen:
- DE-A1- 2 135 877
- DE-A1- 4 119 355
- DE-A1- 19 710 129

## Beschreibung

Die Erfindung betrifft ein Wandelement mit einem Gestell, dessen voneinander beabstandeten Längsseiten jeweils aus zumindest zwei Ständern gebildet sind, welche Ständer jeweils aus wenigstens einem Profilabschnitt hergestellt sind, wobei zwischen benachbarten Ständern wenigstens eine wasser- und verrottungsbeständige Wärmedämmstoffplatte vorgesehen ist, die beidseits an einem außenliegenden Profilsteg der benachbarten Profilabschnitte anliegt, wobei ein sandiges, erdiges, torfiges oder mineralisches Substrat in dem zwischen den Längsseiten des Gestells gebildeten Gestell-Hohlraum vorgesehen ist, welches Substrat an den Innenseiten der Wärmedämmstoffplatte anliegt, wobei das Wandelement als begrüntes Wandelement ausgebildet ist und wobei dazu in mindestens einer der Wärmedämmstoffplatten Pflanzlöcher vorgesehen sind, durch welche Pflanzlöcher die im Substrat verwurzelte Vegetation über die Wärmedämmstoffplatten nach außen vorsteht.

Wandelemente sind bereits in den verschiedensten Ausführungen bekannt, um als Sichtschutz, als Blickfang oder auch als Lärmschutzwand zu dienen. So hat man bereits quaderförmige Wandelemente aus Beton geschaffen, die zu einer Schutzwand übereinander gestapelt werden können. Diese als Hohlkörper ausgestalteten und mit mineralischem Substrat gefüllten Wandelemente weisen, teils auch im Bereich von Ausformungen, Pflanzlöcher auf, aus denen die im mineralischen Substrat wurzelnde Vegetation nach Außen vorsteht. Solche übereinander gestapelten und aus Beton hergestellten Wandelemente sind jedoch schwer und unhandlich und weisen erhebliche Abmessungen auf, wodurch der Anwendungsbereich solcher Wandelemente erheblich eingeschränkt ist.

Aus der DE 197 10 129 A1 ist bereits ein Wandelement der eingangs erwähnten Art vorbekannt, das als künstliche Böschung dem Schutz städtischer Bereiche und Verkehrswege von atmosphärischen Einflüssen, besonders dem Wind und Lärm, dienen soll. Das vorbekannte Wandelement weist ein Gestell auf, dessen voneinander beabstandeten Längsseiten jeweils aus zumindest zwei Ständern gebildet sind. Diese Ständer sind fein profiliert und aus einem Blech mit geringer Dicke hergestellt. Zwischen den benachbarten Ständern ist wenigstens eine Längswand vorgesehen, die aus einer Mehrzahl von Verbindungselementen besteht, welche jeweils die Form einer hohlen Kassette ohne Boden haben, um zu ermöglichen, dass Pflanzen durch diese hohlen Kassetten hindurchwachsen können. Die die Längsseiten des Gestells bildenden Ständer sind über horizontal orientierte und voneinander beabstandete Stege miteinander verbunden. In die zwischen den Stegen gebildeten Zwischenräume sind die Kassetten von außen einsetzbar, bis die Kassetten mit einem umlaufenden Flansch auf den Stegen aufliegen. In dem zwischen den Längsseiten des Gestells gebildeten Gestell-Hohlraum ist ein sandiges, erdiges, torfiges oder mineralisches Substrat eingefüllt, welches Substrat an den Innenseiten der Wärmedämmstoffplatten anliegt, wobei das vorbekannte Wandelement als begrüntes Wandelement ausgebildet ist und wobei dazu in mindestens einer der Wärmedämmstoffplatten Pflanzlöcher vorgesehen sind, durch welche Pflanzlöcher die im Substrat verwurzelte Vegetation über die Wärmedämmstoffplatten nach außen vorsteht. Damit das im Gestell-Hohlraum befindliche Substrat nicht die die Längswände bildenden Kassetten nach außen drückt, sind diese Kassetten aus vergleichsweise schwerem, gleichzeitig aber auch wasser- und verrottungsbeständigem Betonholz hergestellt. Auch ohne das im Gestell-Hohlraum bereits eingefüllte Substrat ist das vorbekannte Wandelement vergleichsweise schwer und unhandlich und lässt sich nur mit einem erheblichen Aufwand auch nachträglich noch an der gewünschten Stelle positionieren.

Es besteht daher insbesondere die Aufgabe, ein Wandelement der eingangs erwähnten Art zu schaffen, das sich einfacher und mit geringem Aufwand herstellen und montieren lässt.

Die erfindungsgemäße Lösung dieser Aufgabe besteht in den Merkmalen des geltenden Patentanspruchs 1.

Das erfindungsgemäße Wandelement weist ein Gestell auf, das als Trägerkonstruktion dient und bei Bedarf rasch aufgebaut werden kann. Die voneinander beabstandeten Längsseiten des Gestells sind jeweils aus zumindest zwei, in vertikaler Richtung orientierten Ständern gebildet, die jeweils aus wenigstens einem Profilabschnitt hergestellt sind. Zwischen den benachbarten Ständern an jeder Längsseite des Gestells ist wenigstens eine wasser- und verrottungsbeständige Wärmedämmstoffplatte vorgesehen. Die die Längswände des Wandelements bildenden Wärmedämmstoffplatten liegen an ihren in vertikaler Richtung orientierten Plattenrändern beidseits jeweils an einem außenliegenden Profilsteg der die Ständer bildenden benachbarten Profilabschnitte an. In dem zwischen den Längswänden des Gestells gebildeten Gestell-Hohlraum wird ein sandiges, erdiges, torfiges oder mineralisches Substrat eingefüllt. Das in ungefülltem Zustand noch leicht zu transportierende und auszurichtende Gestell erhält durch das in dem Gestell-Hohlraum aufgefüllte Substrat ein derartiges Gewicht, dass das Wandelement anschließend sicher, fest und unverrückbar an dem gewählten Ort verbleibt. Da die verwendeten Wärmedämmstoffplatten wasser- und verrottungsbeständig sind, ist eine lange Lebensdauer des erfindungsgemäßen Wandelements sichergestellt.

Das erfindungsgemäße Wandelement ist als begrüntes Wandelement ausgebildet. Dazu sind in mindestens einer der Wärmedämmstoffplatten Pflanzlöcher vorgesehen, durch welche Pflanzlöcher die im Substrat verwurzelte Vegetation über die Wärmedämmstoffplatte(n) nach außen vorsteht. Das in den zwischen den beabstandeten Längswänden des Wandelements gebildeten Gestell-Hohlraum eingefüllte Substrat dient den verwendeten Pflanzen anschließend als Wurzelraum. Dazu sind in mindestens einer der für das erfindungsgemäße Wandelement verwendeten Wärmedämmstoffplatten Pflanzlöcher vorgesehen, die in den Wärmedämmstoffplatten bereits werkseitig eingearbeitet sind oder auch nach dem Montieren und Auffüllen des Gestells mit Substrat auch nachträglich noch, beispielsweise mit einem Lochbohrer, eingearbeitet werden können. Durch diese Pflanzlöcher kann die im Substrat verwurzelte Vegetation über die das Pflanzloch umgrenzende Wärmedämmstoffplatte nach außen vorstehen. Die über die zumindest eine Wärmedämmstoffplatte vorstehende Vegetation erfährt dort eine ausreichende Sonneneinstrahlung, ohne das befürchtet werden muss, dass das von der Wärmedämmstoffplatte geschützte Substrat und die darin befindlichen Wurzeln sich derart übermäßig aufheizen, dass dies den Pflanzen abträglich wäre.

Da bei dem erfindungsgemäßen Wandelement das Substrat die Wärmedämmstoffplatten gegen die Profilstege drückt, und da diese Wärmedämmstoffplatten an den Profilstegen druckbedingt sicher, unverrückbar und fest anliegen, kann bei Bedarf auf eine weitere Befestigung der Wärmedämmstoffplatten an den Profilstegen verzichtet werden.

Eine bevorzugte Ausführungsform gemäß der Erfindung, die sich durch eine hohe Beständigkeit des Wandelements auszeichnet, sieht vor, dass die wenigstens eine Wärmedämmstoffplatte eine aus extrudiertem Polystyrol geschäumte Dämmstoffplatte ist. Solche, aus extrudiertem Polystyrol geschäumte Dämmstoffplatten sind im Handel beispielsweise unter der Marke "Styrodur" erhältlich. Die aus extrudiertem Polystyrol geschäumten Dämmstoffplatten zeichnen sich durch eine hohe Wasser- und Verrottungsbeständigkeit aus.

Um das erfindungsgemäße Wandelement besser an die Umgebung anpassen oder gemäß den Wünschen und Vorstellungen des Betrachters gestalten zu können, ist es vorteilhaft, wenn wenigstens einer der Wärmedämmstoffplatten mindestens an ihrer Sichtseite gestrichen, bemalt, beklebt, strukturiert oder beschichtet ist.

Damit die die Längswände des Wandelements bildenden Wärmedämmstoffplatten dem Druck des auf der Innenseite des Gestells im Gestell-Hohlraum anliegenden Substrats standhalten können, ist es vorteilhaft, wenn die wenigstens eine Wärmedämmstoffplatte zumindest an einer ihrer Flachseiten und vorzugsweise zumindest an ihrer außenliegenden Flachseite eine gewebeverstärkte Oberflächenschicht, insbesondere aus Mörtel, aufweist. Durch eine solche gewebeverstärkte Oberflächenschicht wird einerseits die Festigkeit der Wärmedämmstoffplatte und andererseits auch die Wasser- und Verrottungsbeständigkeit dieser Dämmstoffplatte noch zusätzlich erhöht.

Um die an den Längsseiten des Gestells vorgesehenen und in vertikaler Richtung orientierten Ständer ausreichend auf Abstand zu halten, damit dazwischen zumindest eine Wärmedämmstoffplatte eingeschoben werden kann, ist es vorteilhaft, wenn zumindest zwei benachbarte Ständer an wenigstens eine der Längsseiten des Gestells über Längsriegel miteinander verbunden sind.

Um die Stabilität des erfindungsgemäßen Wandelements zu erhöhen, ist es vorteilhaft, wenn dessen Längswände aus mehreren Wärmedämmstoffplatten gebildet sind. Dabei sieht eine bevorzugte Ausführungsform gemäß der Erfindung vor, dass die, zumindest zwei benachbarte Ständer miteinander verbindenden und voneinander beabstandeten Längsriegel als Profilabschnitte ausgebildet sind, die an ihren einander zugewandten Längsseiten jeweils einen Profilsteg tragen, an welchen Profilstegen wenigstens eine der Wärmedämmstoffplatten anliegt. Somit kann eine jede Wärmedämmstoffplatte derart von Innen im Gestell-Hohlraum aus in ein Feld des Gestells eingelegt werden, das durch in vertikaler Richtung orientierte Ständer und in horizontaler Richtung orientierte Längsriegel umgrenzt ist. Dabei sind an den Ständern sowie an den Riegeln Profilstege vorgesehen, welche die Auflagefläche für die in das Feld eingelegte Wärmedämmstoffplatte bilden.

Vorteilhaft kann es sein, wenn zumindest eine der Wärmedämmstoffplatten mit dem Profilsteg wenigstens einer der benachbarten Profilabschnitte und/oder der benachbarten Längsriegel verbunden ist. Sind die Wärmedämmstoffplatten mit den Profilstegen insbesondere der als Ständer dienenden benachbarten Profilabschnitte verbunden, kann auf weitere Längsriegel bei Bedarf auch verzichtet werden.

Um die Wärmedämmstoffplatten mit den Profilstegen an den als Ständer dienenden Profilabschnitten und/oder an den Längsriegeln zu verbinden, kann es vorteilhaft sein, wenn zumindest eine der Wärmedämmstoffplatten mit dem Profilsteg wenigstens einer der benachbarten und als Ständer dienenden Profilabschnitte und/oder der benachbarten Längsriegel mittels einer Schraub-, Niet- oder Rastverbindung verbunden ist.

Um das Gestell auch an dessen Quer- oder Schmalseiten zu schließen, ist es vorteilhaft, wenn die in den vertikal orientierten Eckbereichen des Gestells vorgesehenen Ständer jeweils zumindest zwei, im rechten Winkel zueinander angeordnete Profilstege haben und wenn die Querwände des Wandelements jeweils durch mindestens eine Wärmedämmstoffplatte verschlossen sind, die beidseits an den einander zugewandten außenliegenden Profilstegen der in den vertikalen Eckbereichen des Gestells vorgesehenen Ständern anliegen.

Dabei können auch die an den Quer- oder Schmalseiten des Gestells vorgesehenen Wärmedämmstoffplatten durch das im Gestell-Hohlraum befindliche Substrat gegen die Profilstege der in den Eckbereichen des Gestells vorgesehenen Ständer gedrückt werden. Zusätzlich oder stattdessen ist es aber auch möglich, dass die die Quer- oder Schmalseiten bildenden Wärmedämmstoffplatten mit den Profilstegen beispielsweise mittels einer Schraub-, Niet- oder Rastverbindung verbunden sind.

Um die beidseits die Längsseiten des Gestells bildenden Ständer auf Abstand zu halten, ist es vorteilhaft, wenn die die Längsseiten des Gestells bildenden Ständer über Querriegel und/oder zumindest eine Querverstrebung auf Abstand gehalten sind.

Die in dem im Gestell-Hohlraum befindlichen Substrat wurzelnde Vegetation benötigt eine ausreichende Wasserzufuhr, damit diese Vegetation gedeihen kann. Dazu sieht eine bevorzugte Ausführungsform gemäß der Erfindung vor, dass das Gestell an seiner der Standfläche abgewandten Gestell-Oberseite offen ausgebildet ist. Da das Gestell an seiner Gestell-Oberseite offen ausgebildet ist und dort keinerlei Wärmedämmstoffplatten trägt, kann das Regenwasser von oben gut in das im Gestell-Hohlraum befindliche Substrat tropfen und dort an das Wurzelwerk der Vegetation gelangen.

Zweckmäßig ist es, wenn das Gestell einen rechteckigen Grundriss hat.

Dabei sieht eine bevorzugte Ausführungsform gemäß der Erfindung, die sich durch eine besonders hohe Standsicherheit auszeichnet, vor, dass das Gestell sich im Längsschnitt zu seiner Gestell-Oberseite hin verjüngt.

Damit das erfindungsgemäße Wandelement auf einem ausreichend festen Untergrund steht, ist es vorteilhaft, wenn die die Längswände des Gestells bildenden Ständer auf einem vorzugsweise streifenförmigen Pflaster platzierbar sind.

Dabei sieht eine besonders vorteilhafte Ausführungsform gemäß der Erfindung vor, dass die Ständer an jeder Längsseite des Gestells jeweils auf einem vorzugsweise streifenförmigen Pflaster platzierbar sind.

Damit das in den Gestell-Hohlraum tropfende Regenwasser nicht das dort befindliche Substrat bei starkem Regen übermäßig durchnässen kann und damit eine Staunässe in diesem Substrat vermieden wird, ist es vorteilhaft, wenn die jeweils einer Längsseite des Gestells zugeordneten streifenförmigen Pflaster voneinander beabstandet sind und wenn zwischen den voneinander beabstandeten Pflaster- Streifen ein Sickerbereich für das im Gestell-Hohlraum vorgesehene Substrat angeordnet ist. Weiterbildungen gemäß der Erfindung ergeben sich aus den Ansprüchen in Verbindung mit der Beschreibung sowie der Zeichnung. Nachstehend wird die Erfindung anhand eines bevorzugten Ausführungsbeispieles noch näher beschrieben.

Es zeigt:
- Fig. 1: das Gestell für ein begrüntes Wandelement beim Auskleiden des Gestells mit Wärmedämmstoffplatten, welche Wärmedämmstoffplatten anschließend die Wände des begrünten Wandelements bilden,
- Fig. 2: das Gestell aus Figur 1 in einer Seitenansicht, wobei hier angedeutet ist, dass sowohl die Längsseiten als auch die Querseiten des Gestells mit Wärmedämmstoffplatten ausgekleidet werden können,
- Fig. 3: das mit Wärmedämmstoffplatten ausgekleidete Gestell aus den Figuren 1 und 2 in einer perspektivischen Seitenansicht,
- Fig. 4: das mit Wärmedämmstoffplatten ausgekleidete und in seinem Gestell-Hohlraum mit mineralischen Substrat aufgefüllte Gestell, das nun als begrüntes Wandelement dient, wobei in zumindest einem der Wärmedämmstoffplatten Pflanzlöcher vorgesehen sind, durch welche Pflanzlöcher die im Substrat verwurzelte Vegetation über die Wärmedämmstoffplatten nach Außen vorsteht.

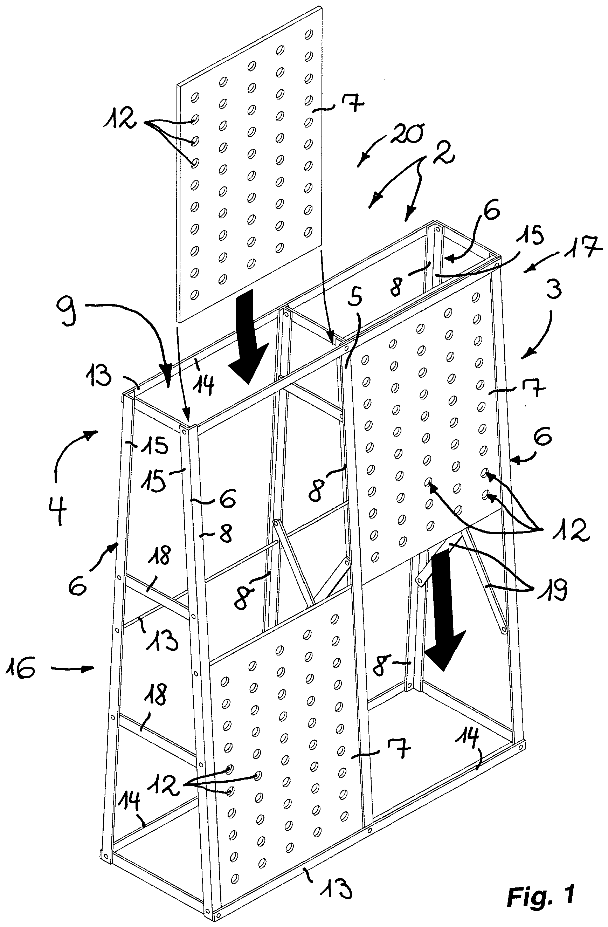

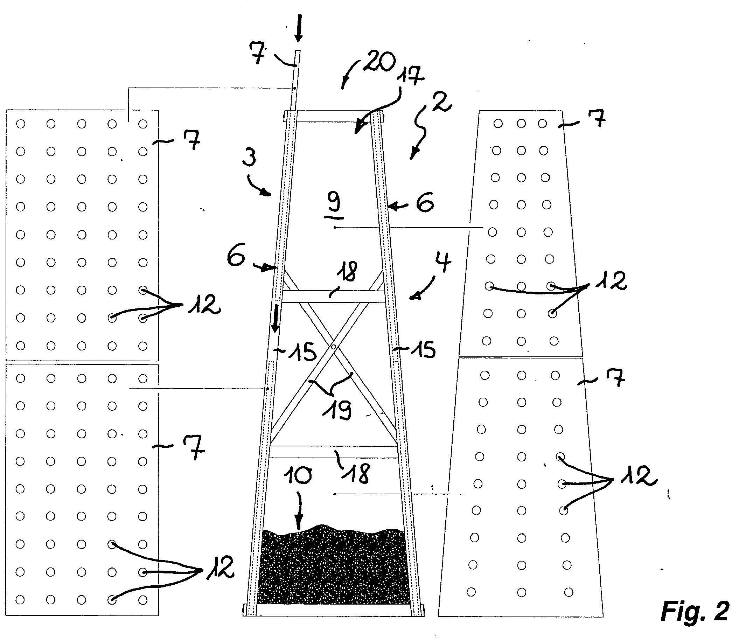

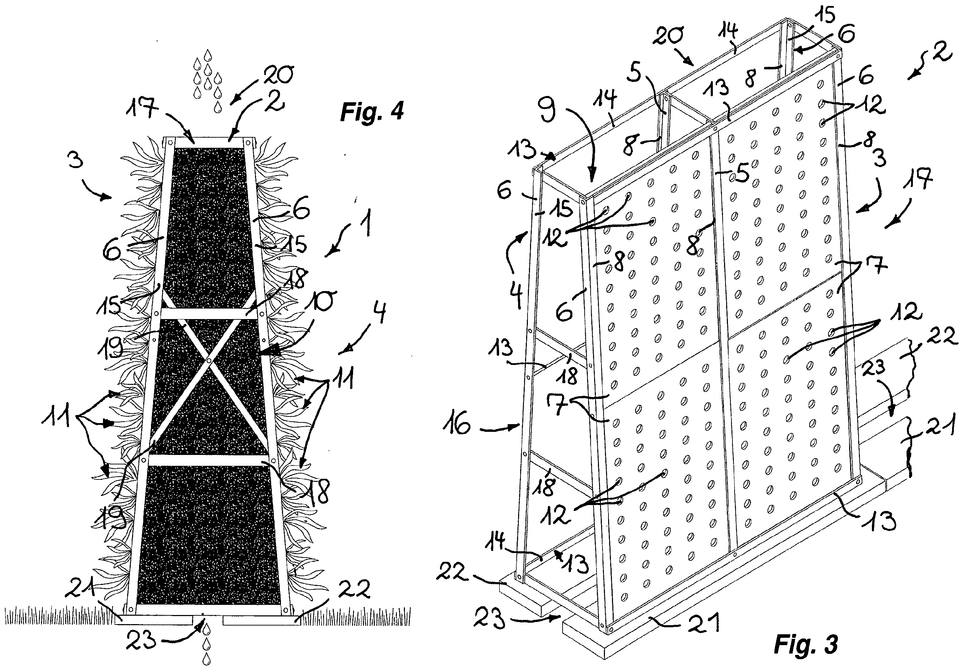

In Figur 4 ist ein begrüntes Wandelement 1 dargestellt, das das in den Figuren 1 bis 3 näher gezeigte Gestell 2 aufweist. Das Gestell 2 dient dem begrünten Wandelement 1 als Trägerkonstruktion. Die voneinander beabstandeten Längsseiten 3, 4 des Gestells 2 sind jeweils aus zumindest zwei, in vertikaler Richtung orientierten Ständern 5 und 6 gebildet, die jeweils aus wenigstens einem Profilabschnitt hergestellt sind. Zwischen benachbarten Ständern 5, 6 an jeder Längsseite 3, 4 des Gestells 2 ist wenigstens eine wasser- und verwitterungsbeständige Wärmedämmstoffplatte 7 vorgesehen. Die die Längswände des Wandelements 1 bildenden Wärmedämmstoffplatten 7 liegen an ihren in vertikaler Richtung orientierten Rändern beidseits jeweils an einem außenliegenden Profilsteg 8 der die Ständer 5, 6 bildenden benachbarten Profilabschnitte an. In dem zwischen den beabstandeten Längswänden des Wandelements 1 gebildeten Gestell-Hohlraum 9 wird ein erdiges, torfiges oder mineralisches Substrat 10 eingefüllt, das den verwendeten Pflanzen 11 im Wandelement 1 anschließend als Wurzelraum dient.

Das in ungefülltem Zustand noch leicht zu transportierende und auszurichtende Gestell 2 erhält durch das in den Gestell-Hohlraum 9 aufgefüllte Substrat 10 ein derartiges Gewicht, dass das Wandelement 1 anschließend sicher, fest und unverrückbar an dem gewählten Ort verbleibt. Das im Gestell-Hohlraum 9 an den Innenseiten der Wärmedämmstoffplatten 7 anliegende Substrat 10 drückt die Wärmedämmstoffplatten 7 gegen die Profilstege 8, derart, dass auf ein Verschrauben dieser Wärmedämmstoffplatten 7 an den Profilabschnitten 5, 6 des Gestells 2 verzichtet werden kann. In mindestens einer der für das Wandelement 1 verwendeten Wärmedämmstoffplatten 7 sind Pflanzlöcher 12 vorgesehen, die in den Wärmedämmstoffplatten bereits werksseitig vorgesehen sind oder auch nach dem Montieren und Auffüllen des Gestells 2 mit Substrat 10 auch noch nachträglich, beispielsweise mit einem Lochbohrer, eingearbeitet werden können. Durch diese Pflanzlöcher 12 kann die im Substrat 10 verwurzelte Vegetation über die das Pflanzloch 12 umgrenzende Wärmedämmstoffplatte 7 vorstehen. Da diese Wärmedämmstoffplatten 7 wasser- und verrottungsbeständig sind, ist eine lange Lebensdauer des hier gezeigten Wandelements 1 sichergestellt. Die über die zumindest eine Wärmedämmstoffplatte 7 vorstehende Vegetation erfährt dort eine ausreichende Sonneneinstrahlung, ohne das befürchtet werden muss, dass das von den Wärmedämmstoffplatten 7 geschützte Substrat 10 und die darin befindlichen Wurzeln der Pflanzen 11 sich derart übermäßig aufheizen, dass dies den Pflanzen 11 abträglich wäre.

Die für das hier gezeigte Wandelement 1 verwendeten Wärmedämmstoffplatten 7 sind aus extrudiertem Polystyrol aufgeschäumt. Dabei weisen diese Wärmedämmstoffplatten 7 zumindest an einer ihrer Flachseiten und vorzugsweise an beiden Flachseiten jeweils eine gewebeverstärkte Oberflächenschicht, insbesondere aus Mörtel, auf.

Aus einem Vergleich der Figuren 1 bis 4 ist erkennbar, dass die Ständer 5, 6 an den Längsseiten 3, 4 des Gestells 2 über Längsriegel 13 miteinander verbunden sind. Dabei sind die zumindest zwei, benachbarte Ständer 5, 6 miteinander verbindenden und voneinander beabstandeten Längsriegel 13 ebenfalls als Profilabschnitte ausgebildet, die an ihren aneinander zugewandten Längsseiten jeweils einen Profilsteg 14 tragen, an welchem Profilsteg 14 wenigstens eine der Wärmedämmstoffplatten 7 anliegt.

In den Figuren 1 und 3 ist erkennbar, dass die in den vertikal orientierten Eckbereichen des Gestells 2 vorgesehenen Ständer 6 jeweils zumindest zwei, im rechten Winkel zueinander angeordnete Profilstege 8, 15 haben und das die Querseiten 16, 17 des Gestells jeweils durch mindestens eine Wärmedämmstoffplatte 7 verschlossen ist, die beidseits an den einander zugewandten außenliegenden Profilstegen 15 der in den vertikalen Eckbereichen des Gestells 2 vorgesehenen Ständer 6 anliegen.

Aus einem Vergleich der Figuren 1 bis 3 wird deutlich, dass die die Längsseiten 3, 4 des Gestells 2 bildenden Ständer 5, 6 über Querriegel 18 und Querverstrebungen 19 auf Abstand gehalten sind.

Damit das von den Pflanzen 11 benötigte Regenwasser in den Gestell-Hohlraum 9 eindringen und dort in das Substrat 10 einsickern kann, ist das Gestell 2 an seiner der Standfläche abgewandten Gestell-Oberseite 20 offen ausgebildet. Das Gestell 2 des Wandelements 1 hat hier einen rechteckigen Grundriss. Dabei verjüngt sich das Gestell 2 im Längsschnitt zu seiner Gestell-Oberseite 20 hin. Die die Längsseiten des Gestells 2 bildenden Ständer 5, 6 fußen auf streifenförmigen Pflastern 21, 22. Dabei stützen sich die Ständer 5, 6 an jeder Längsseite 3, 4 des Gestells 2 jeweils auf einem dieser streifenförmigen Pflaster 21, 22 ab. Diese streifenförmigen Pflaster 21, 22 sind voneinander beabstandet, wobei zwischen den voneinander beabstandeten Pflaster-Streifen ein Sickerbereich 23 für das im Gestell-Hohlraum 9 vorgesehene Substrat 10 angeordnet ist. Auf diese Weise wird verhindert, dass sich das Substrat 10 bei überstarkem Regen zu sehr durchfeuchten kann und dass sich im Gestell-Hohlraum 9 eine Staunässe im Substrat 10 bildet. Während die in den Eckbereichen des Gestells 2 angeordneten Ständer 6 sowie die an der Ober- und Unterseite des Gestells 2 befindlichen Längsriegel 13 aus im Querschnitt L-förmigen Profilab-schnitten gebildet sind, sind die zwischen den in den Eckbereichen angeordneten Ständern 6 vorgesehenen Ständer 5 an den Längsseiten 3, 4 des Gestells 2 sowie die zwischen den oberen und unteren Längsriegeln 13 angeordneten Längsriegel 13 durch im Querschnitt T-förmige Profilabschnitte gebildet.

Um die im Substrat verwurzelte Vegetation gegebenenfalls auch kontrolliert mit Wasser versorgen zu können, kann im Gestell-Hohlraum und insbesondere auch im Substrat, beispielsweise auf der Innenseite der Wärmestoffplatten 7, wenigstens ein Bewässerungsschlauch verlegt sein, der aus dem Wandelement 1 herausgeführt und dort mit dem Leitungsnetz oder einer anderen Wasserquelle verbunden ist. Das mit Substrat gefüllte Wandelement 1 bildet eine solide und stabile Schwergewichtsmauer.

### Bezugszeichenliste

- 1: Wandelement
- 2: Gestell
- 3: (erste) Längsseite (des Gestells)
- 4: (zweite) Längsseite (des Gestells)
- 5: (mittiger) Ständer
- 6: Ständer (in den Eckbereichen)
- 7: Wärmedämpfstoffplatte
- 8: Profilsteg (an den Ständern 5, 6)
- 9: Gestell-Hohlraum
- 10: Substrat
- 11: Pflanzen
- 12: Pflanzlöcher
- 13: Längsriegel
- 14: Profilsteg (an den Längsriegeln 13)
- 15: Profilstege (an den Querseiten der Ständer 6)
- 16: (erste) Querseite (des Gestells)
- 17: (zweite) Querseite (des Gestells)
- 18: Querriegel
- 19: Querverstrebung
- 20: Gestell-Oberseite
- 21: streifenförmiges Pflaster
- 22: streifenförmiges Pflaster
- 23: Sickerbereich

## Patentansprüche

1. Wandelement (1) mit einem Gestell (2), dessen voneinander beabstandeten Längsseiten (3, 4) jeweils aus zumindest zwei Ständern (5, 6) gebildet sind, welche Ständer (5, 6) jeweils aus wenigstens einem Profilabschnitt hergestellt sind, wobei zwischen benachbarten Ständern (5, 6) wenigstens eine wasser- und verrottungsbeständige Wärmedämmstoffplatte vorgesehen ist, die beidseits an einem außenliegenden Profilsteg (8) der benachbarten Profilabschnitte anliegt, wobei ein sandiges, erdiges, torfiges oder mineralisches Substrat (10) in dem zwischen den Längsseiten (3, 4) des Gestells (2) gebildeten Gestell-Hohlraum (9) vorgesehen ist, welches Substrat (10) an den Innenseiten der Wärmedämmstoffplatte anliegt, wobei das Wandelement (1) als begrüntes Wandelement (1) ausgebildet ist und wobei dazu in mindestens einer der Wärmedämmstoffplatten Pflanzlöcher (12) vorgesehen sind, durch welche Pflanzlöcher (12) die im Substrat (10) verwurzelte Vegetation über die Wärmedämmstoffplatten nach außen vorsteht, **dadurch gekennzeichnet, dass** die die Längswände des Wandelementes (1) bildenden Wärmedämmstoffplatten (7) an ihren in vertikaler Richtung orientierten Rändern beidseits jeweils an einem außenliegenden Profilsteg (8) der die Ständer (5, 6) bildenden benachbarten Profilabschnitte anliegen unddass das im Gestell-Hohlraum (9) an den Innenseiten der Wärmedämmstoffplatten (7) anliegende Substrat die Wärmedämmstoffplatten (7) gegen die Profilstege (8) drückt.

2. Wandelement nach Anspruch 1, **dadurch gekennzeichnet, dass** die wenigstens eine Wärmedämmstoffplatte (7) eine aus extrudiertem Polystyrol geschäumte Dämmstoffplatte ist.

3. Wandelement nach Anspruch 1 oder 2, **dadurch gekennzeichnet, dass** wenigstens eine der Wärmedämmstoffplatten (7) mindestens an ihrer Sichtseite gestrichen, bemalt, beklebt, strukturiert oder beschichtet ist.

4. Wandelement nach Anspruch 1 bis 3, **dadurch gekennzeichnet, dass** die wenigstens eine Wärmedämmstoffplatte (7) zumindest an einer ihrer Flachseiten und vorzugsweise zumindest an ihrer außenliegenden Flach- oder Sichtseite eine gewebeverstärkte Oberflächenschicht, insbesondere aus Mörtel, aufweist.

5. Wandelement nach einem der Ansprüche 1 bis 4, **dadurch gekennzeichnet, dass** zumindest zwei benachbarte Ständer (5, 6) an wenigstens einer der Längsseiten (3, 4) des Gestells (2) über Längsriegel (13) miteinander verbunden sind.

6. Wandelement nach Anspruch 5, **dadurch gekennzeichnet, dass** die zumindest zwei, benachbarte Ständer (5, 6) miteinander verbindenden und voneinander beabstandeten Längsriegel (13) als Profilabschnitte ausgebildet sind, die an ihren einander zugewandten Längsseiten jeweils einen Profilsteg (14) tragen, an welchen Profilstegen (14) wenigstens eine der Wärmedämmstoffplatten (7) anliegt.

7. Wandelement nach einem der Ansprüche 1 bis 6, **dadurch gekennzeichnet, dass** das Substrat (10) die Wärmedämmstoffplatten (7) gegen die Profilstege (8; 14) drückt.

8. Wandelement nach einem der Ansprüche 1 bis 7, **dadurch gekennzeichnet, dass** zumindest eine der Wärmedämmstoffplatten (7) mit dem Profilsteg (8; 14) wenigstens einer der benachbarten und als Ständer (5, 6) dienenden Profilabschnitte und/oder der benachbarten Längsriegel (13) verbunden ist.

9. Wandelement nach Anspruch 8, **dadurch gekennzeichnet, dass** zumindest eine der Wärmedämmstoffplatten (7) mit dem Profilsteg (8; 14) wenigstens einer der benachbarten und als Ständer (5, 6) dienenden Profilabschnitte und/oder der benachbarten Längsriegel (13) mittels einer Schraub-, Niet- oder Rastverbindung verbunden ist.

10. Wandelement nach einem der Ansprüche 1 bis 9, **dadurch gekennzeichnet, dass** die in den vertikal orientierten Eckbereichen des Gestells (2) vorgesehenen Ständer (6) jeweils zumindest zwei, im rechten Winkel zueinander angeordnete Profilstege (8, 15) haben, und dass die Querseiten (16, 17) des Gestells (2) jeweils durch mindestens eine Wärmedämmstoffplatte (7) verschlossen sind, die beidseits an den einander zugewandten außenliegenden Profilstegen (15) der in den vertikalen Eckbereichen des Gestells (2) vorgesehenen Ständer (6) anliegen.

11. Wandelement nach einem der Ansprüche 1 bis 10, **dadurch gekennzeichnet, dass** die an den Längsseiten (3, 4) des Gestells (2) vorgesehenen Ständer (5, 6) über Querriegel (18) und/oder zumindest eine Querverstrebung (19) auf Abstand gehalten sind.

12. Wandelement nach einem der Ansprüche 1 bis 11, **dadurch gekennzeichnet, dass** das Gestell (2) an seiner Gestell-Oberseite (20) offen ausgebildet ist.

13. Wandelement nach einem der Ansprüche 1 bis 12, **dadurch gekennzeichnet, dass** das Gestell (2) einen rechteckigen Grundriss hat.

14. Wandelement nach einem der Ansprüche 1 bis 13, **dadurch gekennzeichnet, dass** das Gestell (2) sich im Längsschnitt zu seiner Gestell-Oberseite (20) hin verjüngt.

15. Wandelement nach einem der Ansprüche 1 bis 14, **dadurch gekennzeichnet, dass** die an den Längsseiten (3, 4) des Gestells (2) vorgesehenen Ständer (5, 6) auf einem vorzugsweise streifenförmigen Pflaster (21, 22) platzierbar sind.

16. Wandelement nach einem der Ansprüche 1 bis 15, **dadurch gekennzeichnet, dass** die Ständer (5, 6) an einer jeden Längsseite (3, 4) des Gestells (2) jeweils auf einem vorzugsweise streifenförmigen Pflaster (21, 22) platzierbar sind.

## Claims

1. Wall element (1) having a framework (2) of which the spaced-apart longitudinal sides (3, 4) are each formed from at least two uprights (5, 6), which uprights (5, 6) are each produced from at least one profiled portion, wherein at least one water-and rot-resistance thermal insulation material panel is provided between adjacent uprights (5, 6) and bears on both sides against an outer profile web (8) of the adjacent profiled portions, wherein a sandy, earthy, peaty or mineral substrate (10) is provided in the framework cavity (9) formed between the longitudinal sides (3, 4) of the framework (2), which substrate (10) bears against the inner sides of the thermal insulation material panel, wherein the wall element (1) is designed as a green wall element (1) and wherein planting holes (12) are provided for this purpose in at least one of the thermal insulation material panels, through which planting holes (12) the vegetation routed in the substrate (10) projects outwardly beyond the thermal insulation material panels, **characterized in that** the thermal insulation material panels (7) forming the longitudinal walls of the wall element (1) bear, at their edges oriented in the vertical direction, on both sides in each case against an outer profile web (8) of the adjacent profiled portions forming the uprights (5, 6), and **in that** the substrate bearing against the inner sides of the thermal insulation material panels (7) in the framework cavity (9) presses the thermal insulation material panels (7) against the profile webs (8).

2. Wall element according to Claim 1, **characterized in that** the at least one thermal insulation material panel (7) is an insulation material panel foamed from extruded polystyrene.

3. Wall element according to Claim 1 or 2, **characterized in that** at least one of the thermal insulation material panels (7) is daubed, painted, stickered, structured or coated at least on its visible side.

4. Wall element according to Claims 1 to 3, **characterized in that** the at least one thermal insulation material panel (7) has a woven-fabric-reinforced surface layer, in consisting of mortar, at least on one of its flat sides and preferably at least on its outer flat or visible side.

5. Wall element according to one of Claims 1 to 4, **characterized in that** at least two adjacent uprights (5, 6) are connected to one another on at least one of the longitudinal sides (3, 4) of the framework (2) via longitudinal bars (13).

6. Wall element according to Claim 5, **characterized in that** the spaced-apart longitudinal bars (13) connecting the at least two adjacent uprights (5, 6) to one another are designed as profiled portions which each bear a profile web (14) on their mutually facing longitudinal sides, against which profile webs (14) there bears at least one of the thermal insulation material panels (7).

7. Wall element according to one of Claims 1 to 6, **characterized in that** the substrate (10) presses the thermal insulation material panels (7) against the profile webs (8; 14).

8. Wall element according to one of Claims 1 to 7, **characterized in that** at least one of the thermal insulation material panels (7) is connected to the profile web (8; 14) of at least one of the adjacent profiled portions serving as uprights (5,6) and/or of the adjacent longitudinal bars (13) .

9. Wall element according to Claim 8, **characterized in that** at least one of the thermal insulation material panels (7) is connected to the profile web (8; 14) of at least one of the adjacent profile portions serving as uprights (5, 6) and/or of the adjacent longitudinal bars (13) by means of a screw connection, rivet connection or latching connection.

10. Wall element according to one of Claims 1 to 9, **characterized in that** the uprights (6) provided in the vertically oriented corner regions of the framework (2) each have at least two profile webs (8, 15) arranged at a right angle to one another, and **in that** the transverse sides (16, 17) of the framework (2) are each closed by at least one thermal insulation material panel (7), which thermal insulation material panels bear on both sides against the mutually facing outer profile webs (15) of the uprights (6) provided in the vertical corner regions of the framework (2).

11. Wall element according to one of Claims 1 to 10, **characterized in that** the uprights (5, 6) provided on the longitudinal sides (3, 4) of the framework (2) are held at a distance via transverse bars (18) and/or at least one transverse strut (19).

12. Wall element according to one of Claims 1 to 11, **characterized in that** the framework (2) is of open design at its framework upper side (20).

13. Wall element according to one of Claims 1 to 12, **characterized in that** the framework (2) has a rectangular outline.

14. Wall element according to one of Claims 1 to 13, **characterized in that** the framework (2) tapers in longitudinal section towards its framework upper side (20).

15. Wall element according to one of Claims 1 to 14, **characterized in that** the uprights (5, 6) provided on the longitudinal sides (3, 4) of the framework (2) can be placed on a preferably strip-like paving (21, 22).

16. Wall element according to one of Claims 1 to 15, **characterized in that** the uprights (5, 6) on each longitudinal side (3, 4) of the framework (2) can each be placed on a preferably strip-like paving (21, 22).

## Revendications

1. Elément de mur (1) avec un châssis (2), dont les côtés longitudinaux espacés l'un de l'autre (3, 4) sont formés respectivement par au moins deux montants (5, 6), montants (5, 6) qui sont respectivement composés d'au moins une partie de profilé, dans lequel il est prévu entre des montants voisins (5, 6) au moins un panneau d'isolant thermique résistant à l'eau et au pourrissement, qui s'applique sur les deux côtés sur une aile extérieure de profilé (8) des parties de profilé voisines, dans lequel il est prévu un substrat (10) en sable, en terre, en tourbe ou minéral dans l'espace creux de châssis (9) formé entre les côtés longitudinaux (3, 4) du châssis (2), substrat (10) qui est appliqué sur les côtés intérieurs du panneau d'isolant thermique, dans lequel l'élément de mur (1) est réalisé comme un élément de mur végétalisé (1) et dans lequel il est prévu à cet effet dans au moins un des panneaux d'isolant thermique des trous de plantation (12), à travers lesquels de la végétation enracinée dans le substrat (10) est saillante vers l'extérieur sur les panneaux d'isolant thermique, **caractérisé en ce que** les panneaux d'isolant thermique (7) formant les parois longitudinales de l'élément de mur (1) s'appliquent par leurs bords orientés en direction verticale sur les deux côtés respectivement sur une aile de profilé extérieure (8) des parties de profilé voisines formant les montants (5, 6) et **en ce que** le substrat s'appliquant dans l'espace creux du châssis (9) sur les côtés intérieurs des panneaux d'isolant thermique (7) pousse les panneaux d'isolant thermique (7) contre les ailes de profilé (8).

2. Elément de mur selon la revendication 1, **caractérisé en ce que** ledit au moins un panneau d'isolant thermique (7) est un panneau isolant cellulaire en polystyrène extrudé.

3. Elément de mur selon la revendication 1 ou 2, **caractérisé en ce qu'**au moins un des panneaux d'isolant thermique (7) est enduit, peint, encollé, structuré ou revêtu au moins sur son côté visible.

4. Elément de mur selon une revendication 1 à 3, **caractérisé en ce que** ledit au moins un panneau d'isolant thermique (7) présente au moins sur un de ses côtés plats et de préférence au moins sur son côté plat ou visible situé à l'extérieur une couche de surface, en particulier en mortier, renforcée par une armature.

5. Elément de mur selon l'une quelconque des revendications 1 à 4, **caractérisé en ce qu'**au moins deux montants voisins (5, 6) sont assemblés l'un à l'autre sur au moins un des côtés longitudinaux (3, 4) du châssis (2) au moyen de verrous longitudinaux (13).

6. Elément de mur selon la revendication 5, **caractérisé en ce que** les verrous longitudinaux (13) qui assemblent l'un à l'autre au moins deux montants voisins (5, 6) et qui sont espacés l'un de l'autre sont réalisés sous forme de parties de profilé, qui portent sur leurs côtés longitudinaux tournés l'un vers l'autre chaque fois une aile de profilé (14), ailes de profilé (14) sur lesquelles s'applique au moins un des panneaux d'isolant thermique (7).

7. Elément de mur selon l'une quelconque des revendications 1 à 6, **caractérisé en ce que** le substrat (10) pousse les panneaux d'isolant thermique (7) contre les ailes de profilé (8; 14).

8. Elément de mur selon l'une quelconque des revendications 1 à 7, **caractérisé en ce qu'**au moins un des panneaux d'isolant thermique (7) est assemblé à l'aile de profilé (8; 14) d'au moins une des parties de profilé voisines et servant de montants (5, 6) et/ou des verrous longitudinaux voisins (13).

9. Elément de mur selon la revendication 8, **caractérisé en ce qu'**au moins un des panneaux d'isolant thermique (7) est assemblé à l'aile de profilé (8; 14) d'au moins une des parties de profilé voisines et servant de montants (5, 6) et/ou des verrous longitudinaux voisins (13) au moyen d'un assemblage par vis, par rivets ou par encliquetage.

10. Elément de mur selon l'une quelconque des revendications 1 à 9, **caractérisé en ce que** les montants (6) prévus dans les régions de coin orientées verticalement du châssis (2) comportent respectivement au moins deux ailes de profilé (8, 15) disposées à angle droit l'une par rapport à l'autre, et **en ce que** les sections transversales (16, 17) du châssis (2) sont fermées respectivement par au moins un panneau d'isolant thermique (7), qui s'applique sur les deux côtés sur les ailes de profilé extérieures (15) tournées l'une vers l'autre des montants (6) prévus dans les régions de coin verticales du châssis (2).

11. Elément de mur selon l'une quelconque des revendications 1 à 10, **caractérisé en ce que** les montants (5, 6) prévus sur les côtés longitudinaux (3, 4) du châssis (2) sont maintenus à distance par des verrous transversaux (18) et/ou au moins une entretoise transversale (19).

12. Elément de mur selon l'une quelconque des revendications 1 à 11, **caractérisé en ce que** le châssis (2) est ouvert sur son côté supérieur de châssis (20).

13. Elément de mur selon l'une quelconque des revendications 1 à 12, **caractérisé en ce que** le châssis (2) présente un pourtour de base rectangulaire.

14. Elément de mur selon l'une quelconque des revendications 1 à 13, **caractérisé en ce que** le châssis (2) se rétrécit en section longitudinale en direction de son côté supérieur de châssis (20).

15. Elément de mur selon l'une quelconque des revendications 1 à 14, **caractérisé en ce que** les montants (5, 6) prévus sur les côtés longitudinaux (3, 4) du châssis (2) peuvent être placés sur un dallage de préférence en forme de bande (21, 22).

16. Elément de mur selon l'une quelconque des revendications 1 à 15, **caractérisé en ce que** les montants (5, 6) peuvent être placés sur chaque côté longitudinal (3, 4) du châssis (2) respectivement sur un dallage de préférence en forme de bande (21, 22).
